Europäisches Patentamt

European Patent Office

Office européen des brevets

(19)

(11) **EP 0 409 288 B1**

(12) **EUROPEAN PATENT SPECIFICATION**

(45) Date of publication and mention
of the grant of the patent:
**28.02.1996 Bulletin 1996/09**

(51) Int Cl.[6]: **C08J 5/18**, B29C 61/00
// B29K67/00

(21) Application number: **90116831.0**

(22) Date of filing: **12.11.1987**

(54) **Shrinkable polyester film**

Polyester-Schrumpffolie

Film rétractable de polyester

(84) Designated Contracting States:
**DE FR GB**

(30) Priority: **12.11.1986 JP 269251/86**
**11.12.1986 JP 295590/86**
**15.12.1986 JP 298427/86**
**17.02.1987 JP 33731/87**
**11.03.1987 JP 56236/87**
**11.06.1987 JP 145753/87**
**26.10.1987 JP 269765/87**

(43) Date of publication of application:
**23.01.1991 Bulletin 1991/04**

(62) Application number of earlier application in
accordance with Art. 76 EPC: **87310026.7**

(73) Proprietor: **DIAFOIL HOECHST CO., LTD**
**Bunkyo-ku, Tokyo (JP)**

(72) Inventors:
• **Fukuda, Yujiro**
**Machida-shi, Tokyo (JP)**
• **Utsumi, Shigeo**
**Midori-ku, Yokohama-shi, Kanagawa-ken (JP)**

(74) Representative: **Woods, Geoffrey Corlett et al**
**London WC1R 5LX (GB)**

(56) References cited:
**EP-A- 0 210 646**     **DE-B- 1 187 792**
**GB-A- 825 549**     **GB-A- 989 080**
**US-A- 4 020 141**

## Description

The present invention relates to a shrinkable polyester film, more particularly to a shrinkable polyester film suitable for labels for use on PET (polyethylene terephthalate) bottles, other bottles or other articles and for packaging. This application is a divisional of application number 87310026.7.

Hitherto, as a shrinkable film for packaging or labelling, a polyvinyl chloride polystyrene film has generally been used. However, polyvinyl chloride film has difficulties in disposal, that is polyvinyl chloride film has high combustion energy and generates harmful hydrogen chloride when it is burnt. Polystyrene film has poor resistance to weather. Accordingly, a film of another polymer which is suitable for the purposes mentioned above has been desired.

Characteristics necessary for a shrinkable film for packaging and labelling include sufficient shrinkage, resistance to solvents such as printing ink, a shrinking property such that wrinkles do not occur on the label during shrinking treatment and warm water-resistance such that wrinkles, slack and whitening does not occur in the warm water treatment carried out after the shrinking treatment of the film for sterilization of the bottle.

For the above-mentioned demands, it has been disclosed that a film having sufficient shrinkage and excellent heat sealing property can be obtained by monoaxially stretching a noncrystalline copolyester, a blend of a noncrystalline copolyester and a crystalline polyester or a blend of two or more kinds of crystalline polyester in the machine direction or the transverse direction (refer to JP-A-57-42726(1982), JP-A-57-159618(1982) and JP-A-59-97175(1984). However, even in such a film, satisfactory shrinking properties and warm water-resistance cannot be obtained, in particular satisfactory shrinking properties. Such a film is apt to wrinkle during shrinking treatment as compared to convention films, for example of polyvinyl chloride. Thus the above films hitherto proposed have severe problems in practical use.

Furthermore, in recent years, it has been desired to use a shrinkable film on containers of various shapes, and different characteristics have been demanded corresponding to the properties of the various containers, particularly for widely used containers for soft drinks such as a PET bottle, a large glass bottle with a small mouth, a heat-resistant PET bottle and a non heat-resistant PET bottle. Accordingly, it has been desired to obtain a shrinkable polyester film which satisfies the respective characteristics.

The present invention provides a shrinkable monoaxially stretched polyester film which comprises not less than 50 mol% of ethylene terephthalate units and which has a shrinkage of from 20 to 69% in one of the machine and transverse directions and a shrinkage of not more than 5% in the other direction after 5 min treatment in an air oven at 100°C, an elongation at break of from 1 to 100% in the direction perpendicular to the main shrinking direction and a heat of fusion of from 8.4 to 33.5 kJ/kg (2 to 8 cal/g), the dicarboxylic acid component of said polyester comprising (i) terephthalic acid units and (ii) isophthalic or phthalic acid units, and the diol component of said polyester comprising (i) ethylene glycol units and (ii) diethylene glycol units, with the proviso that the diol component does not comprise neopentyl glycol units.

The present invention also provides a method of applying a film to a bottle or other article, which method comprises shrinking a film as defined above onto the bottle or other article.

The shrinkable polyester film of the present invention has excellent shrinking properties, resistance to warm water, breaking strength and colour tone and is suitable for use as a label.

The polyester constituting the shrinkable film of the present invention comprises not less than 50 mol%, preferably from 65 to 95 mole%, of ethylene terephthalate units. As the remaining constitutional units, one or more units other than ethylene terephthalate units, which comprise a dicarboxylic acid component and a diol component, may be present. The dicarboxylic acid component comprises terephthalic acid units and isophthalic or phthalic acid units. It may additionally comprise, for example, oxalic acid, malonic acid, succinic acid, adipic acid, azelaic acid, sebacic acid, naphthalenedicarboxylic acids or diphenyl ether dicarboxylic acid units. The diol component comprises ethylene glycol and diethylene glycol units, but no neopentyl glycol units. It may additionally comprise, for example, trimethylene glycol, tetramethylene glycol, hexamethylene glycol, polyalkylene glycol or 1,4-cyclohexane dimethanol units.

The polyester used in the present invention can have the amorphous portion necessary for a shrinkable film as well as excellent heat-resistance.

The glass-transition temperature ($T_g$) of the polyester is preferably not lower than 65°C, more preferably not lower than 70°C. Since a film produced from a polyester having a $T_g$ of below 65°C has poor heat-resistance, it is apt to distort in the periphery of the heat-sealed part after shrinking. Accordingly such a polyester is not desirable.

The polyester may be formed by polymerization of the major starting material comprising terephthalic acid and isophthalic acid in a molar ratio of from 50:50 to 95:5 with ethylene glycol, as the major constituting component.

In the polycondensation reaction in the production of the polymer used in the present invention, any catalyst employed in conventional methods may be used. An antimony compound such as antimony trioxide, antimony trichloride, antimony acetate or antimony glycolate; a germanium compound such as germanium dioxide or germanium glycolate; and a titanium compound such as titanium tetrapropoxide or titanium tetrabutoxide are usually used.

The antimony compound is greatly preferred as the catalyst, particularly or the polyester which comprises terephthalic acid and isophthalic acid in a molar ratio of from 50:50 to 95:5 as the dicarboxylic acid component, since the molten thermal stability of the polyester obtained is excellent.

Furthermore, it is particularly preferable, in order to improve the molten thermal stability of the polyester, that the polyester does not contain any metal compound which is soluble in the polyester, except for the antimony compound used as the polycondensation catalyst.

The amount of such a polycondensation catalyst is preferably from 200 to 700 ppm, more preferably from 200 to 500 ppm relative to the amount of the polyester. When the amount of the catalyst is below 200 ppm, the polycondensation reaction rate becomes extremely low. Thus an amount of catalyst below 200 ppm is not preferred.

The molten thermal stability of the polyester can be extremely improved by using the above method, and, furthermore, in the process of making the thus produced polyester into films, the generation of sublimed material is minimized. Thus films having excellent colour tone are obtainable.

In general, the intrinsic viscosity of the polyester is preferably not less than 0.50, more preferably not less than 0.60 and particularly preferably not less than 0.65. In the case where the intrinsic viscosity is below 0.50, the degree of crystallinity of the polyester is high and the shrinkage of a film produced from such a polyester is lowered. Accordingly such a case is not preferred.

A method for producing the film according to the present invention is now described.

After drying the crystalline polyester, in which inorganic particles have been contained to impart a slipping property to the film, under the same conditions as those for drying the usual polyethylene terephthalate or a copolymer thereof, the thus dried polyester is extruded into an unstretched film. The thus obtained unstretched film is monoaxially stretched in the machine direction or the transverse direction.

Monoaxial stretching may be carried out in the machine direction by rolls and in the transverse direction by a tenter. After heat-setting the thus obtained film a a temperature of not higher than 120°C, as occasion demands, the thus treated film is wound up as the product.

The thickness of the thus obtained film is not particularly limited. However, the preferred thickness is from 2 to 500 μm, more preferably from 5 to 300 μm.

The preferred shrinkage of the film of the present invention in the main shrinking direction is not less than 30%. When the shrinkage of the film in the main shrinking direction is less than 20%, the degree of shrinking is insufficient when the film is subjected to shrinking treatment as a label, and the film does not closely adhere to the vessel.

The preferred elongation at break of the film of the present invention in the direction perpendicular to the main shrinking direction is 2 to 50% As a result of the present inventors' examination to improve the shrinking properties of a shrinkable film for labelling, it has been found that there is a very close correlation between the elongation at break and the shrinking properties of the film, although such a correlation between the two was previously not considered to exist. When a film having an elongation at break of over 100% is subjected to shrinking treatment as a label, distortion is apt to occur on the label and the upper end or the lower end of the label is likely to deform obliquely. Accordingly such a film is undesirable. A film having an elongation at break of lower than 1% is undesirable for practical use, because such a film is liable to tear in the direction parallel to the main shrinking direction.

The preferred heat of fusion of the film of the present invention is from 8.4 to 25.1 kJ/kg (2 to 6 cal/g). The shrinking properties of a film having a heat of fusion of over 33.5 kJ/kg (8 cal/g) are deteriorated. It is considered that the deterioration is due to the unevenness of the shrinking of the film caused by the crystallization of the polyester of the film which occurs when the film is heated in the shrink tunnel.

When the heat of fusion is below 8.4 kJ/kg (2 cal/g) the drying method usually used for polyethylene terephthalate cannot be adopted in the step before extruding the film. Accordingly it is necessary to install a new drier. Since such an installation increases costs, such a film is unsuitable for the purpose of the present invention.

The shrinkage of the film of the present invention in the main shrinking direction after keeping the film for 2 weeks in an air oven at 40°C is preferably not more than 3%, more preferably not more than 2% and still more preferably not more than 1%. In the case where the shrinkage of the film is over 3%, labels made from the film undergo dimensional change during storage; such a film is undesirable.

The preferable birefringence of the film of the present invention is from 0.040 to 0.120, more preferably from 0.040 to 0.090. A film having a birefringence below 0.040 has poor warm water-resistance and solvent-resistance, and is undesirable for the purpose of the present invention.

It is preferred that the special (maximum) shrinkage (neck-in rate) of the film of the present invention in the direction perpendicular to the main shrinking direction is not more than 10%, more preferably not more than 5%, after treatment of the film for 5 seconds in warm water at 75°C.

The breaking strength of the film of the present invention in the direction perpendicular to the main shrinking direction is preferably not less than 3 kg/mm$^2$ more preferably not less than 5 kg/mm$^2$. Since a film having a breaking strength of below 3 kg/mm$^2$ is apt to tear in the direction parallel to the main shrinking direction, such a film is undesirable for practical use.

The shrinkage of the film of the present invention in in the direction perpendicular to the main shrinking direction after treating the film for 5 min in an air oven at 100°C is preferably not more than 15%, more preferably not more than 10 and still more preferably not more than 5%. A film having a shrinkage of over 15% shrinks to a large extent along the longitudinal direction of the vessel when the film is subjected to shrinking treatment as a label and deformation of the drawing on the label occurs. Such a film is undesirable.

The average surface roughness of the film of the present invention is preferably from 0.005 to 0.1 μm, more preferably from 0.005 to 0.05 μm. The slipping property of a film having an average surface roughness of not more than 0.005 μm is poor and blocking is generated between the vessel and the label made of the film. Accordingly, shrinking of the label cannot be carried out smoothly, and such a film is undesirable. The transparency of a film having a mean surface roughness of over 0.1 μm is poor. Accordingly such a film is undesirable.

Still another preferable film, described above, having the above-mentioned physical properties according to the present invention, can be produced by a heat-set treatment or UV irradiation treatment, while adopting a suitable combination of the extrusion temperature of the polyester, the rate of stretching the film and the stretching temperature of the film. Thus the monoaxially stretched film may be heat-set, preferably at a temperature of the final stretching temperature to 100°C for from 0.1 s to 5 min in order to obtain a film having the desired neck-in ratio. UV irradiation may be employed instead of or together with the heat-set. The energy of UV irradiation can be from 0.1 to 1000 mJ/cm², preferably 0.1 to 100 mJ/cm², based on the film area.

The further thus obtained preferable film of the present invention does not have distortion during shrinking treatment at a high temperature, and accordingly the film is suitable for use as the shrinkable film on a heat-resistant PET bottle and glass bottle which require the shrinking treatment at a high temperature for a short time.

Necessary information such as a drawing and letteres are printed on the film of the present invention by conventional methods, and the printed film is put on a vessel such as a PET bottle and subjected to shrinking treatment according to the methods well known in the labelling and packaging industry.

The present invention is further described in the following Examples.

Methods of evaluation of the films are as follows:

Shrinkage A:

A specimen of the film (a strip 1 cm in width) was subjected to shrinking treatment for 5 min in a geared oven at a temperature of 100 ± 2°C without load. The shrinkage was calculated from the formula:

$$\text{Shrinkage A} = \frac{L_o - L}{L_o} \times 100$$

wherein $L_o$ is the original length of the specimen (10 cm) and L is the length of the specimen after the shrinking treatment.

Furthermore, after printing a drawing on the film using a printing ink in which a 30:70 mixed solvent of methyl ethyl ketone and ethyl acetate was used, the shrinkage of the thus treated film was measured.

Birefringence (Δn):

By using a polarizing microscope made by the Karl Zeiss Company, the retardation of the film was measured, and the birefringence (Δn) of the film was obtained according to the formula:

$$\Delta n = R/d$$

wherein R is the retardation of the film and d is the thickness of the film.

Heat of fusion of the film (kJ/kg) (cal/g): The area under the temperature-time curve obtained by the fusion of the film under the conditions of sensitivity of 4, temperature increasing speed of 16°C/min and chart speed of 40 mm/min using a DSC-1B machine produced by Perkin Elmer Corp. was calculated. The heat of fusion of the film was calculated according to the formula:

$$\text{Heat of fusion} = A.S. \frac{1}{m}$$

wherein A is the heat of fusion of indium per unit area (kJ/cm²) (cal/cm²) on the chart under the same conditions as above; S is the total area under the fusion curve of the film and m is the weight (g) of the film.

Film haze:

The total haze of the film was obtained by an integrating sphere turbidimeter NDH-20D made by NIPPON DENSHOKU Ind, Company following Japanese Industrial Standard (JIS) K 6714. Furthermore, the film haze was measured after fixing the film to a metal frame under a strain and immersing the thus treated film into warm water at 85°C for 30 min. In the case where wave-like wrinkles were generated on the film and the measurement could not be carried out, an x mark was used in the Tables.

(5) Shrinkage B:

The film was subjected to shrinking treatment for 30 in warm water at a temperature of 85 ± 2°C without load, and the shrinkage of the film was obtained according to the following formula:

$$\text{Shrinkage B (\%)} = \frac{L_o - L}{L_o} \times 100$$

wherein $L_o$ is the original length of the film (10 cm) and L is the length of the film after the shrinking treatment.

(6) Shrinkage C:

A square film having 10 cm sides was subjected to shrinking treatment for 5 seconds in a warm water at a temperature of 75 ± 0.5°C without load, and the shrinkage of the film was obtained in both of the machine direction and the transverse direction according to the following formula. The direction which showed the larger shrinkage was considered to be the main shrinking direction

$$\text{Shrinkage } C \ (\%) = \frac{L_o - L}{L_o} \times 100$$

wherein $L_o$ is the original length of the film (10 cm) and L is the length of the film after contraction.

(7) Neck-in rate:

The film is cut into rectangles of not less than 13 cm in the main shrinking direction and 10 cm in the other direction, and the both ends in the main shrinking direction were fixed to a metal frame having an inner length of 13 x 10 cm. Thereafter, the maximum shrinkage of the film in the direction perpendicular to the main shrinking direction was obtained; the thus obtained value was considered to be the neck-in-rate.

(8) Shrinking stress:

Using an INTESCO tester of type 2001 (made by INTESCO Co., Ltd), a strip of the film of 15 mm width was cut along the main shrinking direction. The strip was fixed to the chuck having an interval of 50 mm, and the thus treated strip was closely kept for one minute in an air oven at 100°C. The maximum shrinking stress shown by the film during the preservation was considered to be the shrinking stress of the film.

(9) Intrinsic viscosity of the film [η]:

Into 20 ml of 50:50 mixed solvent of phenol and tetrachloroethane, 200 mg of the film was added and after dissolving the film by heating for one hour at about 110°C, the intrinsic viscosity of the film was measured at 30°C.

(10) Warm water resistance of the film:

After adhering the film to a cylindrical PET soft drink bottle, the thus labelled bottle was subjected to a sterilization treatment for 10 min by warm water at 90°C. After carrying out the treatment, the case where slackness occurred between the film and the bottle or the case where wave-like wrinkles were caused on the film was designated as x, and the case where close adherence of the film to the bottle was not changed at all was designated as o.

(11) Evaluation (A) of the film as a shrinkable film:

After attaching the film as a shrinkable label onto a bottle in a similar manner to 10, the thus treated bottle was subjected to a sterilization treatment by warm water. The case where no deformation of drawing was caused; the degree of shrinking of the film was sufficient; the close adhesion of the fil to the bottle was excellent; the film was sufficiently transparent and whitening, wrinkles and slack did not occur on the film by the sterilization treatment was designated as o; other cases were designated as x.

(12) Handling property in drying:

The polyester used as the material for the film which can be subjected to the drying method used for drying conventional polyethylene terephthalate was designated as o, and the case where it was necessary to use, for example vacuum drying was designated as x.

(13) Glass transition temperature of polyester (Tg(°C)):

The glass transition temperature of the polyester was measured by a DSC-1B tester made by Perkin Elmer Co. under a sensitivity of 2 and a temperature increasing speed of 4°C/min.

(14) Breaking strength in the main shrinking direction:

A film of 15 mm width fixed to a chuck having an interval of 50 mm was stretched at 20°C and RH of 65% by a TENSILON tester made by TOYO-BALDWIN Co. (UTN-III type) at a stretching speed of 50 mm/min, and the strength of the film at the time of breaking was divided by the cross-sectional area of the original film. The thus obtained value had units of kg/mm$^2$.

(15) Evaluation (E) of the shrinkable film for labelling:

After making the film into a cylindrical form using an adhesive and covering a large glass bottle of 30 cm height, 15 cm diameter at the bottom and 3 cm diameter at the mouth with the cylindrical film from the bottom to the shoulder of the bottle, the thus treated bottle was passed through a shrink tunnel in which the steam temperature was adjusted to 85°C to attach the film to the bottle. The degree of close adhesion of the film to the bottle and the degree of generation of wrinkles and slack on the film were evaluated. The favourable case was designated as o and the case where the state of the film was not favourable was designated as x.

(16) Evaluation of the prevention of the scattering of broken pieces of glass:

The glass bottle covered with the film as in (15) was dropped from a 1.5 m height onto a concrete floor, and the degree of the scattering of the broken pieces of glass was evaluated.

The case where the broken pieces of glass dangerously scattered in all directions after the breaking of the bottle was designated as x; the case where some of the broken pieces of glass were scattered was designated as Δ and the case where the broken pieces of glass were protected by the film and scarcely scattered was designated as o.

(17) Shrinking property (B) of the film:

After making the film into a cylindrical form, a PET bottle was covered with the cylindrical film and the thus treated bottle was passed through a steam shrink tunnel at a temperature of 75°C to shrink the film. After passing through the tunnel, the state of close adhesion of the film to the bottle was judged by eye, and the result was evaluated by o or x based on the degree of close adhesion.

Furthermore, whether the upper end or the lower end of the film was deformed obliquely or not, or the end was distorted or not was judged by eye, and the result was designated as the shrinking unevenness by o and x. As the collective evaluation, the case where the film satisfied the above two items and whitening, wrinkles, for example, were not noticed at all on the film was designated as o, and the case where the film did not satisfy these was designated as x.

(18) Elongation at break of the film in the direction perpendicular to the main shrinking direction:

After mixing a film of 15 mm width (the main shrinking direction) between the chucks having the interval of 50 mm of an INTESCO tester (made by INTESCO Co., Ltd 2001 model), the film was stretched at a stretching speed of 200 mm/min to measure the elongation at break of the film.

(19) Average surface roughness of the film (Ra):

The average surface roughness of the film was obtained as follows by using a surface roughness meter (made by KOSAKA Laboratory Co., model SE-3FK). The radius of the tip of the touching needle was 2 μm and the load was 30 mg.

From the curve of the cross section of film, a part with a length L (2.5 mm) was sampled out along the direction of the centre line. The curve was expressed as the roughness curve y = f(x) by assuming the centre line of the sampling part as the x-axis and the direction perpendicular to the x-axis as the y-axis. The value calculated from the following formula was represented in μm as the average surface roughness of the film. The cutoff value was 80 μm, and Ra was measured at 5 points in the machine direction and 5 points in the transverse direction (in total, at 10 points).

The mean value of the measured values was obtained as the average surface roughness.

$$Ra = \frac{1}{L} \int_{O}^{L} |f(x)| dx$$

(20) Shrinking property (C) of the film:

After making the film into a cylindrical form, a narrow necked heat-resistance PET bottle was covered with the cylindrical film and the thus treated bottle was passed through a shrink tunnel at a temperature of 95°C within 5 s to shrink the film. After passing through the tunnel, the degree of close adhesion of the film to the bottle was judged by eye and the result was evaluated by o and x based on the degree of close adhesion. Furthermore, whether the upper end or the lower end of the film was deformed obliquely or not or was distorted or not was judged by eye, and the result was evaluated as the shrinking unevenness by o and x. As the collective evaluation, the case where the film satisfied the above two items and whitening, wrinkles, for example were not noticed at all on the film was designated as o, and the case where the film did not satisfy these was designated as x.

EXAMPLE 1:

A polyester having an intrinsic viscosity of 0.75 obtained by solid phase polyester having an intrinsic viscosity of 0.75 obtained by solid phase polymerization, which comprises 97 mol% of terephthalic acid and 3 mol% of isophthalic acid as the dicarboxylic component 80 mol% of ethylene glycol and 20 mol% of diethylene glycol as the glycol component, was dried and extruded to obtain an unstretched film. The thus obtained unstretched film was directly introduced into a tenter. After stretching the film by 3.5 times at 85°C and then cooling the stretched film by cool air at 25°C, the film was wound up to obtain a shrinkable film.

The thickness of the thus obtained contractile film was 50 μm,

The physical properties of the film obtained in Example 1 and the result of evaluations of the film as a shrinkable label is collected in Table 1. It can be understood that the films of Example 1 is excellent as a shrinkable film.

Table 1

| | birefrin-gence | shrinkage A (%) | | shrinkage after printing (%) | | shrinking stress (g/mm²) | haze before warm water treatment (%) | haze after warm water treatment (%) | warm water resistance | evalua-tion (A) | heat of fusion kJ/kg (cal/g) | handling property in drying |
| | | machine direction | trans-verse direction | machine direction | trans-verse direction | | | | | | | |
| Ex. 1 | 0.080 | 5 | 69 | 5 | 69 | 580 | 3.0 | 3.0 | O | O | 23 (5.5) | O |

EXAMPLE 2:

After preliminarily crystallizing a polyester having an intrinsic viscosity of 0.75 and a glass transition temperature of 60°C, which comprised 80 mol% of terephthalic acid and 20 mol% of isophthalic acid as the dicarboxylic acid component and 98 mol% of ethylene glycol and 2 mol% of diethylene glycol as the diol component and which contained 400 ppm of amorphous silica having a mean particle diameter of 1.5 μm, the polyester was dried and extruded according to a usual method to obtain an unstretched film. By stretching the unstretched film between a stretching roll at 70°C and a cooling roll by 4.0 times, a film of 50 μm mean thickness was obtained.

The physical properties of the films obtained in Example 2 and the result of evaluations of the film as a shrinkable film for use in labelling are shown in Table 2.

As seen in Table 2, the film of Example 2 sufficiently possesses the properties necessary for a shrinkable film for use in labelling large glass bottles.

Table 2

| | shrinkage B (%) | | breaking strength (kg/mm²) | | evaluation (E) | prevention of scattering of broken glass |
|---|---|---|---|---|---|---|
| | machine direction | transverse direction | machine direction | transverse direction | | |
| Ex. 2 | 75 | 4 | 32.0 | 8.1 | O | O |

EXAMPLE 3 and 4

After preliminarily crystallizing a polyester having an intrinsic viscosity of 0.70 and a glass transition temperature of 66°C, which comprised 80 mol% of terephthalic acid and 20 mol% of isophthalic acid as the dicarboxylic acid component and 98 mol% of ethylene glycol and 2 mol% of diethylene glycol as the diol component and which contained 500 ppm of spherical silica having a mean particle diameter of 0.8 μm by a paddle drier, the polyester was subjected to the main drying and then extruded from an extruder at 260°C. The extruded material was rapidly cooled and solidified to obtain an unstretched film.

The unstretched film was introduced directly into a tenter and after stretching the film by 3.2 times (Example 3) and 4.0 times (Example 4) in the transverse direction and subjecting the stretched film to heat treatment for 10, at 75°C, the film was cooled to obtain a film of about 40μm mean thickness.

The physical properties of the films obtained in Examples 3 and 4 and the results of evaluations of the shrinking properties of the films are shown in Table 3.

As seen in Table 3, the films of Examples 3 and 4 possess excellent properties as shrinkable films for use in labelling.

Table 3

| | stretching temperature (°C) | stretch ratio | heat treatment temperature (°C) | birefringence (Δn) | shrinkage C (%) | | neck-in rate (%) | shrinking property (B) | | |
|---|---|---|---|---|---|---|---|---|---|---|
| | | | | | machine direction | transverse direction | | degree of close adhesion | shrinking unevenness | collective evaluation |
| Ex.3 | 70 | 3.2 | 75 | 0.067 | -1 | 48 | 12 | O | O | O |
| Ex.4 | 70 | 4.0 | 75 | 0.105 | 0 | 45 | 10 | O | O | O |

EXAMPLE 5:

After preliminarily crystallizing a polyester having an intrinsic viscosity of 0.70 and a glass transition temperature of 66°C, which comprised 80 mol% of terephthalic acid and 20 mol% of isophthalic acid as the dicarboxylic acid component and 98 mol% of ethylene glycol and 2 mol% of diethylene glycol as the diol component and which contained 500 ppm of spherical silica having a mean particle diameter of 0.8 μm, by using a paddle drier, the polyester was subjected to the main drying and then extruded at 260°C by an extruder. The extruded material was rapidly cooled and solidified to to obtain an unstretched film.

After stretching the unstretched film by 3.2 times in the transverse direction at 70°C, the stretched film was subjected for 10 s to heat treatment and was cooled to obtain a film of about 40 μm mean thickness.

EXAMPLE 6:

After drying a polyester having an intrinsic viscosity of 0.73 and a glass transition temperature of 69°C, which comprised 90 mol% of terephthalic acid and 10 mol% of phthalic acid as the dicarboxylic acid component and 95 mol% of ethylene glycol and 5 mol% of diethylene glycol as the diol component and which contained 800 ppm of calcium carbonate particles having a mean particle diameter of 1.0 μm, by using a usual method, the dried polyester was extruded at 300°C and rapidly cooled to obtain an unstretched film.

The unstretched film was stretched by 4.0 times between the heating - stretching roll at 75°C and the cooling roll while relaxing the film at 5 in the transverse direction.

After stretching, the stretched film was wound up and the film was subjected to UV irradiation of 15 mJ/cm$^2$ using a carbon arc after unwinding the film. Then the film was wound up again to obtain film of about 30 μm mean thickness.

The physical properties of the films obtained in Examples 5 and 6 and the result of evaluations of the shrinking properties of the films are shown in Table 4.

As seen in Table 4, the films obtained in Examples 5 and 6 have extremely excellent properties as shrinkable films for use in labelling.

**Table 4**

| | shrinkage A (%) | | breaking strength | bire-fringence (Δn) | heat of fusion kJ/kg (cal/g) | Ra (μ) | neck-in rate(%) | shrinking property (C) | | |
|---|---|---|---|---|---|---|---|---|---|---|
| | machine direction | transverse direction | | | | | | degree of close adhesion | shrinking unevenness | collective evaluation |
| Ex 5 | 1 | 41 | 14 | 0.062 | 15.6(4.2) | 0.021 | 4 | O | O | O |
| Ex 6 | 55 | 0 | 32 | 0.081 | 23.5(5.6) | 0.042 | 5 | O | O | O |

## Claims

1. A shrinkable monoaxially stretched polyester film which comprises not less than 50 mol% of ethylene terephthalate units and which has a shrinkage of from 20 to 69% in one of the machine and transverse directions and a shrinkage of not more than 5% in the other direction after 5 min treatment in an air oven at 100°C, an elongation at break of from 1 to 100% in the direction perpendicular to the main shrinking direction and a heat of fusion of from 8.4 to 33.5 kJ/kg (2 to 8 cal/g), the dicarboxylic acid component of said polyester comprising (i) terephthalic acid units and (ii) isophthalic or phthalic acid units, and the diol component of said polyester comprising (i) ethylene glycol units and (ii) diethylene glycol units, with the proviso that the diol component does not comprise neopentyl glycol units.

2. A film according to claim 1, wherein the shrinkage of said film after 2 weeks treatment in an air oven at 40°C is not more than 3% in the main shrinking direction and the transverse direction, and the bi-refringence is from 0.040 to 0.120.

3. A film according to claim 1 or 2, wherein the specific (maximum) shrinkage (the neck-in rate) of said film after 5 sec treatment in water at 75°C is not more than 10% in the direction perpendicular to the main shrinking direction and the breaking strength of said film is not less than 3 kg/mm$^2$.

4. A film according to any one of claims 1 to 3, wherein the mean surface roughness of said film is 0.005 to 0.1 μm.

5. A method of applying a film to a bottle or other article, which method comprises shrinking a film as claimed in any one of the preceding claims onto the bottle or other article.

## Patentansprüche

1. Monoaxial gereckte Polyester-Schrumpffolie, die nicht weniger als 50 mol% Ethylenterephthalateinheiten enthält, und die nach 5-minütiger Behandlung in einem Luftofen bei 100°C in einer der Richtungen Maschinenrichtung und Querrichtung eine Schrumpfung von 20 bis 69 % und in der anderen Richtung eine Schrumpfung von nicht mehr als 5 % hat, in Richtung senkrecht zur Hauptschrumpfungsrichtung eine Reißdehnung von 1 bis 100 % hat und eine Schmelzwärme von 8,4 bis 33,5 kJ/kg (2 bis 8 cal/g) aufweist; wobei die Carbonsäurekomponente des Polyesters (i) Terephthalsäureeinheiten und (ii) Isophthalsäureoder Phthalsäureeinheiten enthält; und die Diolkomponente des Polyesters (i) Ethylenglykoleinheiten und (ii) Diethylenglykoleinheiten enthält, unter der Voraussetzung, daß die Diolkomponente keine Neopentylglykoleinheiten umfaßt.

2. Folie nach Anspruch 1, wobei die Schrumpfung der Folie nach 2-wöchiger Behandlung in einem Luftofen bei 40°C nicht mehr als 3 % in der Hauptschrumpfungsrichtung und der Querrichtung beträgt, und die Doppelbrechung zwischen 0,040 und 0,120 liegt.

3. Folie nach Anspruch 1 oder 2, wobei die spezifische (maximale) Schrumpfung (Rate des "Einlaufens", "neck-in"-Rate) der Folie nach 5-minütiger Behandlung in Wasser bei 75°C in Richtung senkrecht zur Hauptschrumpfungsrichtung nicht mehr als 10 % beträgt, und die Reißfestigkeit der Folie nicht weniger als 3 kg/mm$^2$ ist.

4. Folie nach einem der Ansprüche 1 bis 3, wobei die mittlere Oberflächenrauhigkeit der Folie 0.005 bis 0,1 μm ist.

5. Verfahren zum Aufbringen einer Folie auf eine Flasche oder einen anderen Gegenstand, das eine Schrumpfung einer Folie nach einem der vorangehenden Ansprüche an der Flasche oder dem anderen Gegenstand umfaßt.

## Revendications

1. Film de polyester rétractable étiré monoaxialement, comprenant pas moins de 50 moles % de motifs dérivés de téréphtalate d'éthylène et ayant un retrait de 20 à 69 % dans l'une des directions de machine et transversale, et un retrait de pas plus de 5 % dans l'autre direction après un traitement de 5 minutes dans une étuve à air à 100 °C, un allongement à la rupture de 1 à 100 % dans la direction perpendiculaire à la principale direction de retrait, et une chaleur de fusion de 8,4 à 33,5 kJ/kg (de 2 à 8 cal/g), le composant dérivé d'acide dicarboxylique du polyester comprenant (i) des motifs dérivés d'acide téréphtalique et (ii) des motifs dérivés d'acide isophtalique ou phtalique, et le composant dérivé de diol de ce polyester comprenant (i) des motifs dérivés d'éthylène glycol et (ii) des motifs dérivés de diéthylène glycol, à condition que le composant dérivé de diol ne comprenne pas de motifs dérivés de néopentyl glycol.

2. Film selon la revendication 1, dans lequel le retrait de ce film après un traitement de 2 semaines dans une étuve à air à 40 °C, n'est pas supérieur à 3 % dans la principale direction de retrait et la direction transversale, et la biréfringence est de 0,040 à 0,120.

3. Film selon la revendication 1 ou 2, dans lequel le retrait spécifique (maximum) (le taux de rétrécissement) du film après un traitement de 5 s dans de l'eau à 75 °C, n'est pas supérieur à 10 % dans la direction perpendiculaire à la principale direction de retrait, et la résistance à la rupture du film n'est pas inférieure à 3 kg/mm$^2$.

4. Film selon l'une quelconque des revendications 1 à 3, dans lequel la rugosité superficielle moyenne du film est de 0,005 à 0,1 μm.

5. Procédé d'application d'un film sur une bouteille ou un autre article, selon lequel on rétracte un film selon l'une quelconque des revendications précédentes, sur la bouteille ou l'autre article.